# EUROPÄISCHE PATENTSCHRIFT

(11) **EP 0 311 014 B1**
(45) Veröffentlichungstag und Bekanntmachung des Hinweises auf die Patenterteilung: **01.09.1993**
(21) Anmeldenummer: 88116402.4
(22) Anmeldetag: 04.10.1988
(51) Int. Cl.: G01N 21/89

(54) **Optische Oberflächen-Inspektionsvorrichtung**
Arrangement for the optical inspection of surfaces
Dispositif d'inspection optique de surfaces

(30) Priorität: 09.10.1987 DE 3734294
(43) Veröffentlichungstag der Anmeldung: 12.04.1989
(73) Patentinhaber: Erwin Sick GmbH Optik-Elektronik, D-79183 Waldkirch (DE)
(72) Erfinder: Weber, Klaus, Dr., D-7923 Königsbronn (DE); Ostertag, Klaus, D-8000 München 71 (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- DE-A- 3 534 019
- DE-C- 3 636 192
- GB-A- 2 133 871
- US-A- 3 695 771

## Beschreibung

Die Erfindung betrifft eine optische Oberflächeninspektionsvorrichtung für Materialbahnen nach dem Oberbegriff des Patentanspruches 1.

Zur automatischen Oberflächeninspektion textiler Materialbahnen werden im allgemeinen Laserscanner verwendet, die eine über eine Umlenkrolle laufende Materialbahn quer zu ihrer Bewegungsrichtung abtasten, um Oberflächenfehler aufzusuchen, zu unterscheiden und zu registrieren. Die Erfindung befaßt sich vorzugsweise mit gewebten textilen Materialien, bei denen die Fehlererkennung besonders problematisch ist.

Aus der DE-A-35 34 019 ist eine optische Bahnüberwachungsvorrichtung mit einer Beleuchtungsanordnung und einer Lichtempfangsanordnung bekannt. Die Beleuchtungsanordnung erzeugt mittels einer Lichtquelle über einen Spiegel einen auf der Oberfläche quer zur Längsrichtung der Bahn verlaufenden Beleuchtungsstreifen. Mit der Lichtempfangsanordnung wird das von der Materialbahn unter dem Reflexionswinkel reflektierte Licht durch eine Photoempfangsanordnung in elektrische Signale umgewandelt und anschließend an eine Auswerteelektronik geliefert.

Aus der US 3,695,771 ist ein Verfahren und eine Vorrichtung zur Oberflächenkontrolle eines Werkstückes bekannt. Ein fokussierter Laserstrahl wird über die Oberfläche eines Werkstückes geschwenkt, während ein unter einem spitzen Winkel zu der Werkstückoberfläche angeordneter Photodetektor die durch den Strahl erzeugten Reflexionen erfaßt. Der Photodetektor nimmt die Reflexionen von der Spitze einer zu detektierenden Kante und von dem der Oberfläche des Werkstücks auf, die nicht durch die Kante verdunkelt ist. Mit einer geeigneten Logik kann dann die Höhen der Kante über die verschiedenen Weglängen des Lichtes bestimmt werden.

Die Aufgabe der vorliegenden Erfindung besteht darin, eine optische Oberflächeninspektionsvorrichtung für Materialbahnen der eingangs genannten Gattung zu schaffen, bei der auf einen Laser als Lichtquelle und ein schnellaufendes Spiegelrad verzichtet werden kann, mit der jedoch zumindest die am meisten störenden, in der Textilproduktion auftretenden Fehler gefunden und diskriminiert werden können. Um die Diskriminierung der Fehler zu ermöglichen, müssen die verschiedenartigen Fehler auch möglichst deutlich verschiedenartige Signale und Signalkombinationen liefern.

Zur Lösung dieser Aufgabe sind die Merkmale des Patentanspruchs 1 vorgesehen. Auf diese Weise können nicht nur Verschmutzungen und Ölflecke als Stellen herabgesetzter Remission erkannt und angezeigt werden; vielmehr werden durch den flachen Beobachtungswinkel auch über die Materialoberfläche nach oben hinausragende Fehler, wie Noppen oder lose Fäden als örtliche Abschattungen erkannt.

Die Patentansprüche 2-5 geben Maßnahmen an, wie die Empfindlichkeit bei der Erkennung von der Bahnoberfläche vorstehender Fehlstellen verändert und optimiert werden kann.

Mittels der Ausführungsform nach Anspruch 4 können auch alle in Transmission feststellbaren Bahnfehler erkannt und registriert werden. Zu diesen Fehler gehören vor allem Verdichtungen und Verdünnungen der Bahn sowie das Auftreten von Doppelfäden oder das Fehlen einzelner Fäden. Auch Löcher in der Bahn können so erkannt werden.

Besonders vorteilhaft ist die Ausführungsform nach Anspruch 4, denn hier wird die Transmissions-Zeilenkamera ins nahe Dunkelfeld geschwenkt, wodurch echte Gewebedichte-Bilder erzielt werden. Die untersuchten Gewebe dürften zu diesem Zweck jedoch nicht zu dicht und dunkel gefärbt sein.

Eine besonders kompakte Anordnung der Lichtempfangseinrichtung wird durch die Ausbildung nach Anspruch 5 erzielt. Dabei ist die Länge der Umlenkspiegelstreifen zweckmäßig so wie im Anspruch 5 definiert gewählt.

Besonders vorteilhaft ist es, wenn die Beobachtungswinkel der beiden Zeilenkameras gemäß Anspruch 9 auf einen für die Fehlererkennung optimalen Wert jeweils in Abhängigkeit von dem untersuchtem Material oder den anstehenden Fehlerproblemen eingestellt werden können.

Bei bewegten Materialbahnen, zum Beispiel aus einer Textilmaschine laufend zu einer Aufwickelrolle gelieferten Materialbahnen wird die Ausbildung nach Anspruch 15 bevorzugt.

Besonders vorteilhaft ist weiter die Ausführungsform nach Anspruch 16, weil hierdurch einerseits eine völlig sichere, flatter- und faltenfreie Führung der Materialbahn im Bereich der Inspektionslinie erzielt wird und andererseits die Beobachtung des Bahnbereiches innerhalb des Lichtstreifens in Transmission nicht behindert wird.

Erfindungsgemäß kann der Hohlspiegel ein Zylinderspiegel sein, welcher vergleichsweise billig herstellbar und aufgrund seiner hohen Apertur in Zylinderachsenrichtung vorteilhaft ist. In Richtung senkrecht zur Zylinderachse sollte der Hohlspiegel nur eine Aperturwinkel von etwa 30° aufweisen, um scharfe Schattenkanten zu erzielen.

Besonders bevorzugte Remissions-Beobachtungswinkel sind durch Anspruch 18 gekennezeichnet.

Um während der Bahnbeobachtung ein realistisches Bild vom Zustand der Gewebeoberfläche zu erzielen, ist besonders vorteilhaft die Wiedergabe des Bildes auf einem Fernsehmonitor gemäß Anspruch 19. Dabei können für die Remission und die Transmission gesonderte Monitore vorgesehen sein. Es ist aber auch möglich, einen einzigen Monitor vorzusehen, und durch eine Umschaltung wahlweise das Remissions- oder Transmissionsbild wiederzugeben.

Die Erfindung wird im folgenden beispielsweise anhand der Zeichnung beschrieben; in dieser zeigt:
- Fig. 1: eine schematische Ansicht einer optische Oberflächeninspektionsvorrichtung für Materialbahnen in Richtung parallel zur ebenen Materialbahn und senkrecht zur Vorschubrichtung der Materialbahn,
- Fig. 2: eine schematische Ansicht der beim Gegenstand der Figur 1 verwendeten Lichtempfangseinrichtungen nach den Linien II-II in Figur 1,
- Fig. 3: eine schematische perspektivische Ansicht der beim Gegenstand der Figur 1 verwendeten Beleuchtungseinrichtung und
- Fig. 4: eine schematische vergrößerte Schnittansicht der mit der Oberflächeninspektionsvorrichtung nach den Figuren 1-3 untersuchten Bahn im Bereich des auf der Bahn erzeugten Lichtstreifens zur Veranschaulichung der erfindungsgemäßen Fehlererkennung.

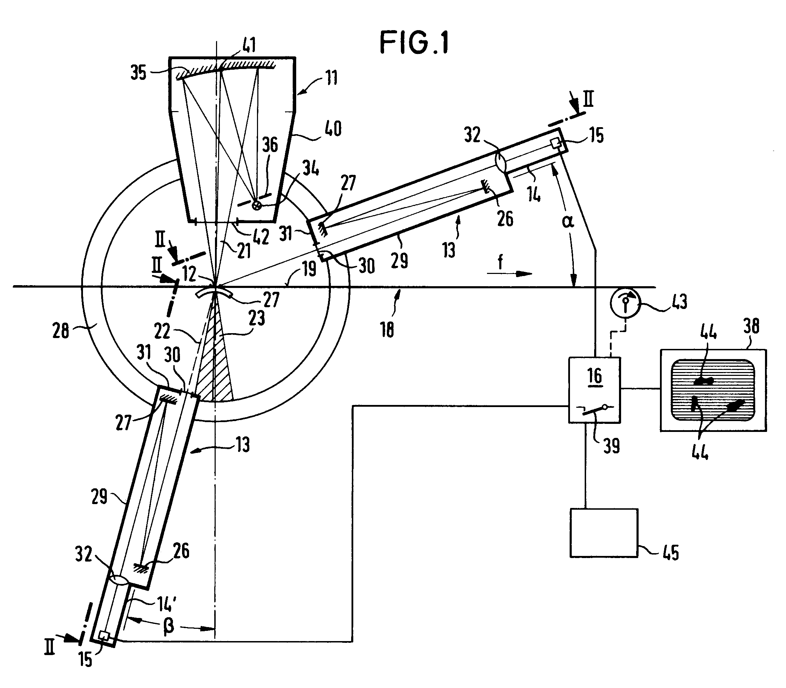

Nach Figur 1 sind an einer Winkelverstellvorrichtung 28 in Form von zwei neben den beiden Rändern einer Materialbahn 18 angeordneten Führungsringen eine in einem Gehäuse 40 untergebrachte Beleuchtungseinrichtung 11 und eine Lichtempfangseinrichtung 13, die aus zwei jeweils eine Zeilenkamera 14, 14' und zwei Umlenkspiegelstreifen 26, 27 enthaltenden flachen Gehäusen 29 besteht, um die Mittelachse (bei 12) der Winkelstellvorrichtung 28 herum verschwenkbar angeordnet.

Eine zu inspizierende Materialbahn 18 läuft zwischen den beiden axial ausgerichteten Führungsringen der Winkelverstellvorrichtung 28 diametral in Richtung des Pfeiles f hindurch, so daß jeweils eine Querlinie auf der Oberfläche 19 der Materialbahn 18 mit der Mittelachse (bei 12) der Winkelstellvorrichtung 28 zusammenfällt. Von unten ist die Materialbahn 18 in diesem Bereich durch einen nach oben konvex gekrümmten transparenten Zylinderabschnitt 27 abgestützt, um einen flatterfreien Transport in Richtung f zu gewährleisten.

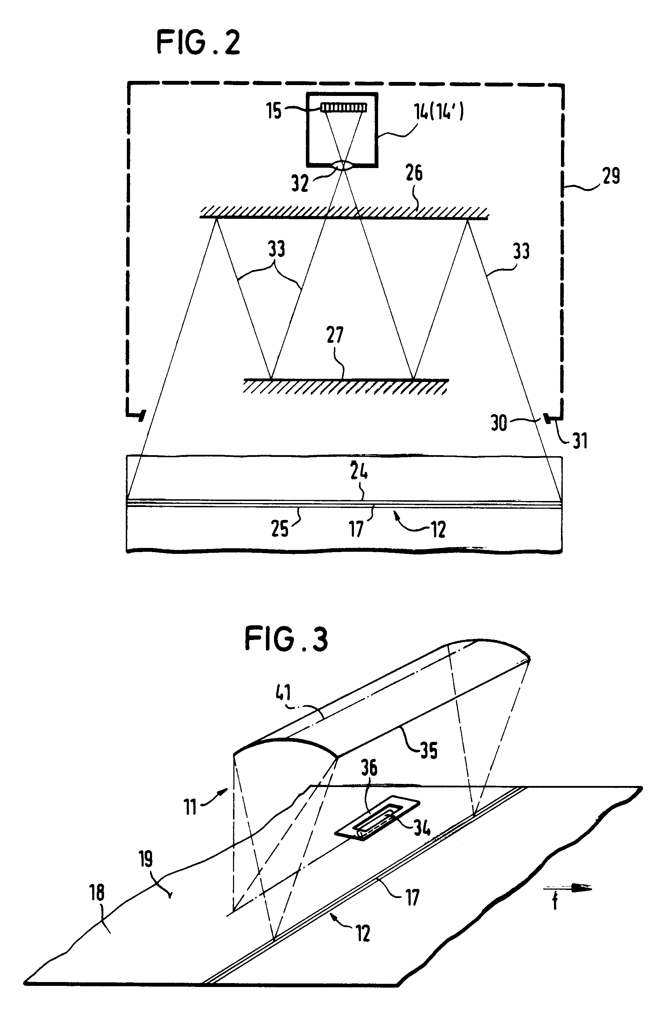

Nach den Figuren 1 und 3 besteht die Beleuchtungseinrichtung 11 aus einer geraden, linienförmigen Lichtquelle 34, unmittelbar vor der der Spalt einer geradlinigen Spaltblende 36 angeordnet ist. Parallel zur Lampe 34 und zur Spaltblende 36 erstreckt sich in einem Abstand größer als die Brennweite ein streifenförmiger Hohlspiegel 35, der um seine Mittellängsachse (nach Figur 1 im Uhrzeigersinn) derart gekippt ist, daß das reflektierte konvergierende Lichtbündel (21) an der Lichtquelle 34 und der Spaltblende 36 vorbei durch ein Fenster 42 im Boden des Gehäuses 40 austreten kann. Die Darstellung in Figur 3 gibt die Beleuchtungseinrichtung 11 in einer in Figur 1 schräg von hinten erfolgenden perspektivischen Ansicht wieder.

Die Abbildungsverhältnisse in der Beleuchtungseinrichtung 11 sind derart, daß der vorzugsweise als Zylinderspiegel ausgebildete streifenförmige Hohlspiegel 35 die durch die Ränder der Öffnung der Spaltblende 36 begrenzte Sekundär-Lichtquelle als schmalen und scharf begrenzten Lichtstreifen 12 auf die Oberfläche 19 der Materialbahn 18 abbildet. Die Längsrichtung der Lichtquelle 34, der Spaltblende 36 sowie des Hohlspiegels 35 verlaufen senkrecht zur Bewegungsrichtung f sowie parallel zu der hier eben verlaufenden Materialbahn 18, so daß der erzeugte Lichtstreifen 12 sich senkrecht zur Vorschubrichtung f der Materialbahn 18 erstreckt.

Nach Figur 3 ist die Lichtquelle 34 und die ihr zugeordnete Spaltblende 36 wesentlich kürzer als der streifenförmige Hohlspiegel 35 ausgebildet, welcher seinerseits kürzer als der von ihm erzeugte Lichtstreifen 12 ist. Gleichwohl wird der Lichtstreifen 12 auch über die beiden Stirnenden des Hohlspiegels 35 hinaus erzeugt, weil durch das zum Teil schräge Auftreffen des von der Lichtquelle 34 ausgehenden Lichtes auf den Hohlspiegel 35 auch noch diejenigen Bereiche der Oberfläche 19 der Bahn erfaßt werden, die sich jenseits der Stirnenden des Hohlspiegels 35 befinden. Dort ist allerdings die Lichtstärke etwas abgeschwächt. Ordnet man jedoch mehrere derartige Beleuchtungseinrichtungen 11 in einer Reihe hintereinander und mit einem deutlichen Abstand der Hohlspiegel 35 an, so überlagern sich die Beleuchtungsbereiche der einzelnen benachbarten Hohlspiegel 35 in den Lücken gerade in der Weise, daß eine weitgehend gleichmäßige Ausleuchtung des Lichtstreifens 12 über seine Gesamtlänge erzielt wird.

Die photoelektrischen Lichtempfangseinrichtungen 13 sind nach den Figuren 1 und 2 jeweils in einem flachen Gehäuse 29 angeordnet. Unmittelbar gegenüber dem Lichtstreifen 12 befindet sich in der parallel zum Lichtstreifen 12 verlaufenden Schmalwand 31 ein Lichteintrittsschlitz 30, der vorzugsweise durch ein Fenster abgeschlossen ist. Auf der vom Lichteintrittsschlitz 30 abgewandten Seite des Gehäuses ist ein erster Umlenkspiegelstreifen 26 parallel zum Lichteintrittsschlitz 30 angeordnet, welcher gemäß Figur 2 deutlich kürzer als der Lichtstreifen 12 ausgebildet ist. Neben dem Lichteintrittsschlitz 30 ist ein weiterer Umlenkspiegelstreifen 27 von noch kürzerer Ausbildung vorgesehen, der das vom ersten Umlenkspiegelstreifen 26 reflektierte Licht zur Zeilenkamera 14 bzw. 14′ umlenkt. Die Länge der Umlenkspiegelstreifen 26, 27 und ihre Anordnung sind so gewählt, daß das gesamte vom Lichtstreifen 12 zum Objektiv 32 der Zeilenkameras 14 bzw. 14′ verlaufende Empfangsbündel vom Lichtstreifen 12 erfaßt wird. Innerhalb der Zeilenkameras 14, 14′ befindet sich jeweils eine parallel zum Lichtstreifen 12 verlaufende Diodenzeile 15, welche nach Figur 1 an eine Auswerteelektronik 16 angeschlossen ist. Der Auswerteelektronik 16 ist auch ein von einem Bahngeschwindigkeitsmesser 43 abgeleitetes Synchronisationssignal zugeführt. An die Auswerteelektronik 16 ist ein Fernsehmonitor 38 angeschlossen, der durch ein Umschalter wahlweise von der Diodenzeile 15 der Zeilenkamera 14 oder 14' angesteuert werden kann.

Die Zeilenkamera 14 ist oberhalb der Materialbahn 19 unter einem Beobachtungswinkel α von etwa 20° angeordnet, während die Zeilenkamera 14' sich unterhalb der Materialbahn 18 befindet, und zwar winkelmäßig unmmittelbar neben dem Beleuchtungsbündel 23, welches von der Beleuchtungseinrichtung 11 im Bereich unterhalb der Materialbahn 18 erzeugt werden würde, wenn diese nicht vorhanden wäre. Die in Transmission arbeitende Zeilenkamera 14' arbeitet also im nahen Dunkelfeld. Das schematisch angedeutete Beobachtungsbündel 22 der Zeilenkamera 14' liegt demnach unmittelbar neben dem Beleuchtungsbündel 23.

Sofern die Beleuchtungseinrichtung 11 die Materialbahn senkrecht von oben beleuchtet, wie das in Figur 1 dargestellt ist, kann die Diodenzeilenkamera 14' bzw. ihr Gehäuse 29 vorzugsweise unter einem Beobachtungwinkel β von etwa 15° zur Vertikalen angeordnet werden.

Nach den Figuren 1-3 bilden die Zeilenkameras 14, 14' eine sich innerhalb des Lichtstreifens 12 befindende Inspektionslinie 17 der Bahnoberflache auf die Diodenzeilen 15 ab.

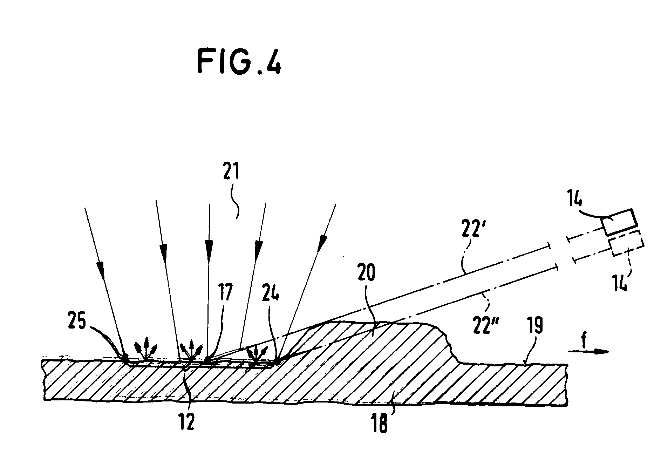

Figur 4 veranschaulicht die Wirkungsweise der in Remission arbeitenden Zeilenkamera 14. Es sei angenommen, daS von der Oberfläche 19 der Materialbahn 18 eine lichtundurchlässige oder nur teilweise lichtdurchlässige Fehlstelle 20 nach oben vorsteht. Die Inspektionslinie 17 ist als senkrecht zur Zeichenebene verlaufend zu denken, desgleichen die den Lichtstreifen 12 seitlich begrenzenden Schattenkanten 24, 25. Das von der Beleuchtungseinrichtung 11 kommende konvergierende Beleuchtungsbündel 21 ist in Figur 4 ebenfalls angedeutet. In strichpunktierten Linien sind zwei Beobachtungsbündel bzw. Beobachtungs-Mittelrichtungen 22′, bzw. 22˝ der nur angedeuteten Zeilenkamera 14 wiedergegeben, von denen die eine auf die Mitte des Beleuchtungsstreifens 12, d.h. auf die Inspektionslinie 17 und die andere (22˝) auf die der hier gestrichelt angedeuteten Zeilenkamera 14 zugewandte Schattenkante 14 des Lichtstreifens 12 gerichtet ist.

Man erkennt, daß bei Einstellung der Zeilenkamera 14 entlang des Beobachtungsbündels 22′ die Fehlstelle 20 nicht so scharf erkannt wird, als wenn die Zeilenkamera 14 entlang des Beobachtungsbündels 22˝ auf die relativ scharfe Schattenkante 24 ausgerichtet ist. Die Fehlererkennung ist also bei Anordnung der Zeilenkamera 14 gemäß dem Beobachtungsbündel 22˝ wesentlich empfindlicher als bei der Ausrichtung auf die Inspektionslinie 17. Durch eine Veränderung der Einstellung zwischen den Positionen 22′ und 22˝ kann exakt die gewünschte Fehlerfeststellungsempfindlichkeit realisiert werden.

Die Wirkungsweise der beschriebenen Inspektionsvorrichtung ist wie folgt:
Nachdem die beiden Zeilenkameras 14, 14′ unter geeigneten Winkeln α bzw. β zur Oberfläche der Materialbahn 18 im Bereich des Lichtstreifens 12 eingestellt worden sind, werden die Beleuchtungseinrichtung 11 und die Zeilenkameras 14, 14′ eingeschaltet, während der Vorschub der Materialbahn 18 in Richtung des Pfeiles f eingeschaltet wird. Die Auswerteelektronik 16 empfängt nunmehr von den Diodenzeilen 15 der Zeilenkameras 14, 14′ entsprechend der Struktur und den Fehlern der Materialbahn 18 geformte Signale, die als Videosignale bezeichnet werden können, weil sie entsprechend einem Videosignal auswertbar sind. Die Vorschubgeschwindigkeit f der Materialbahn 18 ist dabei im Verhältnis zur Abtastgeschwindigkeit der Diodenzeilen 15 so gewählt, daß die Oberfläche 19 der Materialbahn 18 lückenlos in Querrichtung abgetastet wird.

Mittels des vom Bahngeschwindigkeitsmesser 43 kommenden Synchronisiersignals wird der Zeilensprung des Fernsehmonitors 38 so gesteuert, daß entsprechend der zeilenförmigen Abtastung der Materialbahn 18 durch die Diodenzeilen 15 die Zeilen auf dem Fernsehmonitor 38 weitergeschaltet werden. Die Amplitude des dem Fernsehmonitor zugeführten Videosignals wird durch die Ausgangssignale der Diodenzeilen 15 gesteuert, so daß bei Abschattungen durch eine Fehlerstelle 20, wie sie in Figur 4 dargestellt ist, ein Dunkelsignal erzeugt wird. Auf diese Weise entsteht auf dem Fernsehmonitor 38 ein von oben nach unten oder unten nach oben durchlaufendes Bild eines vorbestimmten Längenbereiches der Bahn, in dem die einzelnen Fehlerstellen 44 als dunkle Stellen auf hellem Grund zu erkennen sind. An die Auswerteelektronik 16 können entweder zwei Fernsehmonitore 38 angeschlossen werden, von denen jeder einer der Zeilenkameras 14, 14′ zugeordnet ist. Es ist aber auch möglich, in der Auswerteelektronik 16 einen Umschalter 39 vorzusehen, der wahlweise die eine oder die andere der beiden Zeilenkameras 14, 14′ an den einzigen Fernsehmonitor 38 anzuschließen gestattet.

Außerdem kann an die Auswerteelektronik 16 auch noch ein computermäßig arbeitender Fehleranalysator 45 angeschlossen werden, mittels dessen die auftretenden Fehler klassenweise erfaßt und zum Beispiel in einem Ausdruck wiedergegeben werden können. Hierbei können sowohl die Einzelsignale der Diodenzeilen 15 der beiden Zeilenkameras 14, 14′ als auch aus den beiden Ausgangssignalen kombinierte Signale Verwendung finden. Die Zeilenkameras 14, 14′ sind vorzugsweise mit einem 50 mm-Objektiv 32 ausgestattet.

Besonders vorteilhaft ist es, wenn die beiden Zeilenkameras 14, 14′ und die Ihnen zugeordneten Elemente 26, 27, 29 identisch ausgebildet sind.

Das Fenster 42 und gegebenenfalls das im Lichteintrittsschlitz 30 vorgesehene Fenster sind erfindungsgemäß leicht schräg gestellt, um Doppelbilder zu vermeiden. Die Fenster sind weiter vorstehend vom Gehäuse angebracht, um eine leichte Reinigung zu ermöglichen. Die Zeilenkameras 14, 14′ sind für die Fokussierung und Blendenverstellung zugänglich; hierfür ist eine nicht-dargestellte abdeckbare Gehäuseöffnung vorgesehen.

Das Abbildungsverhältnis des Hohlspiegels 35 beträgt etwa 1:1. Bevorzugt ist eine geringfügige Vergrößerung im Verhältnis 1:1,5.

Bei einer praktischen Realisierung der beschriebenen Oberflächeninspektionsvorrichtung sind die Abmessungen wie folgt:
Abstand Objekt-Eintrittsfenster der Gehäuse 29:
circa 30cm
Abstand Eintrittsfenster der Gehäuse 29-Objektiv 32:
130-140 cm.
Tiefe der Gehäuse 29 in Richtung des Strahlenganges:
circa 50 cm
Aufgrund des gefalteten Strahlenganges wird so eine Herabsetzung der Gehäuselange auf etwa 1/3 der Länge des Strahlenganges erzielt.

Da bei der erfindungsgemäßen Oberflächeninspektionsvorrichtung kein Spiegelrad erforderlich ist und statt eines Lasers klassische, für das Auge völlig ungefährliche Lichtquellen verwendet werden können, ist auch der Anbau an einen Warenschautisch für die visuelle Inspektion möglich. Auf diese Weise wird das Training des Inspektors oder das Einstellen des automatischen Inspektionssystems erleichtert.

## Patentansprüche

1. Optische Oberflächen-Inspektionsvorrichtung für Materialbahnen mit einer Beleuchtungseinrichtung zur Erzeugung eines Lichtstreifens auf der zu inspizierenden Oberfläche der Materialbahn und mit einer photoelektrischen Lichtempfangseinrichtung, die von dem vom Lichtstreifen beaufschlagten Oberflächenbereich remittiertes Licht empfängt und auf eine Photoempfangsanordnung lenkt, die ein für Bahnfehler repräsentatives Signal an eine Auswerteelektronik liefert,
wobei
die Lichtempfangseinrichtung (13) wenigstens eine als Photoempfangsanordnung eine Diodenzeile (15) aufweisende Zeilenkamera (14) umfaßt, welche remittiertes Licht von einer vom Lichtstreifen (12) beleuchteten Linie auf der Oberflache empfangt und die Linie auf die Diodenzeile (15) abbildet dadurch gekennzeichnet daß die Lichtempfangseinrichtung unter einem Beobachtungswinkel (α) zur Tangentialebene an die Oberfläche am Ort des Lichtstreifens (12) angeordnet ist, der kleiner ist als der von der Tangentialebene aus gemessene Reflexionswinkel des eingestrahlten Lichtes, und daß aus der Oberfläche (19) der Materialbahn (18) mit geringer Höhe herausragende Fehlstellen (20) der Zeilenkamera (14) im Schattenriß gegen den hellen Hintergrund des Lichtstreifens (12) erscheinen, so daß von der Diodenzeile (15) ein entsprechendes elektrisches Signal an die Auswerteelektronik (16) abgegeben wird.

2. Vorrichtung nach Anspruch 1, dadurch
**gekennzeichnet,** daß die Linie eine im wesentlichen in der Mitte des Leuchtstreifens (12) liegende Inspektionslinie (17) oder die zur Zeilenkamera (14) hin gelegene Schattenkante (24) des Lichtstreifens (12) ist.

3. Vorrichtung nach Anspruch 2, dadurch
**gekennzeichnet,** daß die Zeilenkamera (14) zwischen der Inspektionslinien-Abbildungsstellung (22′) und der Schattenkanten-Abbildungsstellung (22˝) verstellbar ist, wobei vorzugsweise auch Zwischenstellungen zwischen der Inspektionslinien-Abbildungsstellung und der Schattenkanten-Abbildungsstellung einstellbar sind.

4. Vorrichtung nach einem der vorhergehenden Ansprüche, bei der die Lichtempfangseinrichtung auch von dem vom Lichtstreifen beaufschlagten Oberflächenbereich durchgelassenes Licht empfängt, dadurch
**gekennzeichnet,** daß die Lichtempfangseinrichtung eine weitere als Photoempfangsanordnung eine Diodenzeile (15) aufweisende Zeilenkamera (14′) umfaßt, welche durch die Materialbahn (18) hindurchgegangenes Licht von einer vom Lichtstreifen (12) beleuchteten Linie, insbesondere der Inspektionslinie (17) empfängt und die Linie auf die Diodenzeile (15) abbildet, wobei vorzugsweise das Beobachtungsbündel (22) der in Transmission beobachtenden Zeilenkamera (14′) unmittelbar außerhalb des Winkelbereiches des durch die Materialbahn (18) hindurchgegangenen gedachten Beleuchtungsbündels (23) liegt.

5. Vorrichtung nach einem der vorhergehenden Ansprüche, dadurch **gekennzeichnet,** daß die Zeilenkameras (14, 14′) in oder an einem flachen Gehäuse (29) angeordnet sind, das eine dem Lichtstreifen (12) gegenüberliegende Schmalwand (31) mit einem parallel zum Lichtstreifen (12) verlaufenden Lichteintrittsschlitz (30) von im wesentlichen der Länge der Inspektionslinie (17) und in einem vom Lichteintrittsschlitz (30) abgewandten Bereich einen parallel zum Lichteintrittsschlitz verlaufenden ersten Umlenkspiegelstreifen (26) aufweist, der das Empfangslicht zu einem parallel zu ihm angeordneten zweiten Umlenkspiegelstreifen (27) lenkt, welcher nahe dem Lichteintrittsschlitz (30), aber seitlich versetzt zu diesem angeordnet ist und das Empfangslicht zur am anderen Ende nahe dem ersten Umlenkspiegelstreifen (26), jedoch seitlich versetzt dazu angebrachten Zeilenkamera (14, 14′) lenkt, wobei bevorzugt die ersten und zweiten Umlenkspiegelstreifen (26, 27) entsprechend dem zum Objektiv (32) der Zeilenkamera (14, 14′) konvergierenden Empfangsbündel (33) zunehmend kürzer ausgebildet sind.

6. Vorrichtung nach einem der vorhergehenden Ansprüche, dadurch **gekennzeichnet,** daß der Beobachtungswinkel (α,β) der Zeilenkameras (14, 14′) relativ zur Tangentialebene an die Oberfläche (19) an der Stelle des Lichtstreifens (12) durch Anordnung der Zeilenkameras (14, 14′) bzw. des Gehäuses (29) an einer Winkelverstellvorrichtung (28) einstellbar ist und/oder daß die Beleuchtungseinrichtung (11) eine oder mehrere linienförmige, auf einer gemeinsamen Geraden angeordnete Lichtquellen (34) aufweist, die von einem parallel zu dieser Geraden angeordneten streifenförmigen Hohlspiegel (35) vorzugsweise im Abbildungsmaßstab um 1:1 auf den Materialbahnen (18) abgebildet sind und dort den Lichtstreifen (12) bilden, wobei vorzugsweise die Breite und ggfs. auch Länge der Lichtquelle(n) (34) durch eine unmittelbar von diesen angeordnete Spaltblende (36) definiert ist, deren Ränder den auf der Materialbahn (18) erzeugten Lichtstreifen (12) scharf begrenzen und so zwei Schattenkanten (24, 25) bilden und/oder mehrere Hohlspiegel (35) und Lichtquellen (34) mit Spaltblenden (36) in einer Reihe hintereinander angeordnet sind, um einen aus mehreren Einzellichtstreifen gebildeten durchgehenden Gesamtlichtstreifen zu bilden.

7. Vorrichtung nach Anspruch 6, dadurch
**gekennzeichnet,** daß die Lichtquelle und die Spaltblende (36) deutlich kürzer als der Hohlspiegel (35) und der Hohlspiegel (35) deutlich kürzer als der Lichtstreifen (12) ausgebildet sind.

8. Vorrichtung nach einem der vorhergehenden Ansprüche, dadurch **gekennzeichnet,** daß die Materialbahn (18) in einer Richtung parallel zu ihrer Ebene bewegbar und der Lichtstreifen (12) quer zur Bewegungsrichtung angeordnet ist und/oder daß die Materialbahn (18) bei der Inspektionslinie (17) über einen flachen Zylinderabschnitt (27) aus hartem Glas geführt ist, dessen Zylinderachse parallel zur Inspektionslinie (17) verläuft.

9. Vorrichtung nach einem der vorhergehenden Ansprüche, dadurch **gekennzeichnet,** daß der Hohlspiegel ein Zylinderspiegel (35) ist, dessen Querschnitt vorzugsweise teilkreiszylindrisch oder teilelliptischzylindrisch ist und/oder der flache Beobachtungswinkel (α) der in Remission arbeitenden Zeilenkamera (14) 10 - 30° insbesondere 15 - 25° und vorzugsweise etwa 20° beträgt.

10. Vorrichtung nach einem der vorhergehenden Ansprüche, dadurch **gekennzeichnet,** daß an die Auswerteelektronik (16) ein Fernsehmonitor (38) angeschlossen ist, dem als Zeilenmodulationssignal das Ausgangssignal der Diodenzeile zugeführt ist und dessen Zeilenfrequenz mit der Abtastfrequenz der Diodenzeile (15) und dessen Zeilenvorschub mit der Bahngeschwindigkeit derart synchronisiert ist, daß ein die Fehler als Dunkelstellen wiedergebendes Fernsehbild der sich unter dem Lichtstreifen (12) hindurchbewegenden Oberfläche (19) der Materialbahn entsprechend der auf dem Fernsehmonitor (38) vorliegenden Zeilenzahl erzeugt wird.

## Claims

1. Optical surface inspection apparatus for material webs, the apparatus comprising an illuminating means for generating a strip of light on the surface of the material web to be inspected and a photoelectric light receiving means which receives the light remitted or diffusely reflected from the surface region illuminated by the strip of light and which directs it to a photoreceiving arrangement, with the photoreceiving arrangement delivering a signal representative of web faults to an electronic processing circuit, in which the light receiving device (13) includes at least one row camera (14) having a diode row (15) and serving as a photoreceiving arrangement, with the row camera (14) receiving remitted light from a line on the surface which is illuminated by the light strip (12) and forming an image of the line on the diode row (15), characterised in that the photoreceiving arrangement is arranged at an observing angle (α) to the tangential plane to the surface at the location of the light strip (12) which is smaller than the reflection angle of the emitted light measured from the tangential plane, and in that faults (20) of low height which project out of the surface (19) of the material web (18) appear to the row camera (14) as a shadow outline against the bright background of the light strip (12), so that a corresponding electrical signal is transmitted from the diode row (15) to the electronic processing circuit (16)

2. Apparatus in accordance with claim 1, characterised in that the line is an inspection line (17) which lies substantially at the centre of the strip of light (12); or in that the line is the shadow edge (24) of the light strip disposed towards the row camera (14).

3. Apparatus in accordance with claim 2, characterised in that the row camera (14) is adjustable between the inspection line imaging position (22') and the shadow edge imaging position (22''), and intermediate positions between the inspection line imaging position and the shadow edge imaging position can preferably also be selected.

4. Apparatus in accordance with any one of the preceding claims, wherein the light receiving means also receives light transmitted by the surface region illuminated by the strip of light, characterised in that the light receiving means includes a further row camera (14') having a diode row (15) as a photoreceiving arrangement, with the row camera (14') receiving light which has passed through the material web (18) from a line illuminated by the strip of light (12), in particular from the inspection line (17), and imaging the line onto the diode row (15), with the observing beam (22) of the row camera (14') observing in transmission lying preferably immediately outside of the angular range of the imaginary beam of illumination (23) passing through the material web (18).

5. Apparatus in accordance with any one of the preceding claims, characterised in that the row cameras (14, 14') are arranged in or on a shallow housing (29) which has a narrow wall (31) disposed opposite to the strip of light (12), with the narrow wall (31) having a light entry slit (30) extending parallel to the strip of light (12), and of substantially the same length as the inspection line (17) and having, in a region remote from the light entry slit (30) a first deflecting mirror strip (26) which extends parallel to the light entry slit, with the first deflecting mirror strip (26) deflecting the received light to a second deflecting mirror strip (27) arranged parallel to the first deflecting mirror strip and with the second deflecting mirror strip (27) being disposed closer to the light entry slit (30) but laterally displaced from the latter and directing the received light to the row camera (14, 14'), which is mounted at the other end close to the first deflecting mirror strip (26) but laterally displaced relative thereto, with the first and second deflecting mirror strips (26, 27) being preferably made successively shorter in accordance with the received beam (33) which converges to the objective (32) of the row camera (14, 14')

6. Apparatus in accordance with any one of the preceding claims, characterised in that the observing angle (α,β) of the row cameras (14, 14') relative to the tangential plane to the surface (19) at the position of the strip of light (12) is adjustable by arranging the row camera (14, 14') on an angle adjusting device (28); and/or in that the illuminating means (11) has one or more line-like light sources (34) arranged on a common straight line with the light sources being imaged onto the material webs (18) by a strip-like concave mirror (35) arranged parallel to the straight line, preferably to an imaging scale of 1:1 and forming the strip of light (12) there, with the width and optionally also the length of the light source(s) (34) being preferably defined by a slot diaphragm (36) arranged directly in front of the light source(s) with the edges of the slot diaphragm sharply delimiting the strip of light (12) generated on the material web (18) and thus forming two shadow edges (24, 25), and/or in that several concave mirrors (35) and light sources (34) with slot diaphragms (36) are arranged in a row behind one another in order to form a throughgoing strip of light composed of several individual light strips.

7. Apparatus in accordance with claim 6, characterised in that the light source and the slot diaphragm (36) are made substantially shorter than the concave mirror (35), and in that the concave mirror (35) is made substantially shorter than the strip of light (12).

8. Apparatus in accordance with any one of the preceding claims, characterised in that the material web (18) is movable in a direction parallel to its plane; and in that the strip of light (12) is arranged transverse to the direction of movement, and/or in that the material web (18) is guided at the inspection line (17) over a shallow cylindrical portion (37) of hardened glass, the cylinder axis of which extends parallel to the inspection line (17).

9. Apparatus in accordance with any one of the preceding claims, characterised in that the concave mirror is a cylindrical mirror (35), the cross-section of which is preferably partly cylindrical (right-cylindrical) or partly elliptical, and/or in that the shallow observing angle (α) of the row camera (14) operating in diffuse reflection amounts to 10 to 30°, in particular to 15 to 25° and preferably to approximately 20°.

10. Apparatus in accordance with any one of the preceding claims, characterised in that a television monitor (38) is connected to the electronic processing circuit (16), with the output signal of the diode row being supplied to the television monitor as a line modulation signal, and with the line frequency of the television monitor being synchronised with the scanning frequency of the diode row (15) and its line advance with the speed of the web, such that a television picture is generated of the surface (19) of the material web moving beneath the strip of light (12) in accordance with the number of lines present on the television monitor (38), with the television picture reproducing the faults as dark locations.

## Revendications

1. Appareil d'inspection optique de surfaces pour des produits en bande, l'appareil comprenant des moyens d'illumination pour produire un ruban de lumière sur la surface de la bande à inspecter et des moyens photoélectriques de réception de lumière qui reçoivent la lumière réémise depuis la région de la surface illuminée par le ruban de lumière et qui renvoient cette lumière vers un agencement photorécepteur, lequel délivre un signal représentatif de défauts dans la bande vers un circuit de traitement électronique, lesdits moyens de réception de lumière (13) comprenant au moins une caméra en ligne (14) qui comprend une ligne de diodes (15) et sert en tant qu'agencement photorécepteur, la caméra en ligne (14) recevant la lumière réémise depuis une ligne sur la surface qui est illuminée par le ruban de lumière (12) et formant une image de la ligne sur la ligne de diodes (15), caractérisé en ce que l'agencement photorécepteur est agencé sous un angle d'observation (α) par rapport au plan tangent à la surface à l'emplacement du ruban de lumière qui est inférieur à l'angle de réflexion de la lumière émise mesuré depuis le plan tangent, et en ce que des défauts (20) de faible hauteur qui font saillie par rapport à la surface (19) de la bande (18) apparaissent à la caméra en ligne (14) sous la forme d'un profil en ombre sur l'arrière-plan brillant du ruban lumineux (12), de sorte qu'un signal électrique correspondant est transmis depuis la ligne de diodes (15) vers le circuit de traitement électronique (16).

2. Appareil selon la revendication 1, caractérisé en ce que la ligne est une ligne d'inspection (17) qui se trouve sensiblement au centre du ruban de lumière (12); ou en ce que la ligne est le bord d'ombre (24) du ruban lumineux disposé vers la caméra en ligne (14).

3. Appareil selon la revendication 2, caractérisé en ce que la caméra en ligne (14) peut être réglée entre la position (22') correspondant à la formation de l'image de la ligne d'inspection et la position (22'') correspondant à la formation de l'image du bord d'ombre, et en ce que des positions intermédiaires entre la position de formation d'image de la ligne d'inspection et la position de formation d'image du bord d'ombre peuvent de préférence également être choisies.

4. Appareil selon l'une quelconque des revendications précédentes, dans lequel les moyens de réception de lumière reçoivent également de la lumière transmise par la région de surface illuminée par le ruban de lumière, caractérisé en ce que les moyens de réception de lumière comprennent une autre caméra en ligne (14') comportant une ligne de diodes (15) en tant qu'agencement photorécepteur, la caméra en ligne (14') recevant la lumière qui a traversé la bande (18) depuis une ligne illuminée par le ruban de lumière (12), en particulier depuis la ligne d'inspection (17), et formant l'image de la ligne sur la ligne de diodes (15), le faisceau d'observation (22) de la caméra en ligne (14') qui observe en transmission étant de préférence situé immédiatement à l'extérieur de la plage angulaire du faisceau imaginaire d'illumination (23) qui traverse la bande (18).

5. Appareil selon l'une quelconque des revendications précédentes, caractérisé en ce que les caméras en ligne (14, 14') sont disposées dans ou sur un boîtier aplati (29) qui comporte une paroi étroite (31) disposée à l'opposé du ruban de lumière (12), la paroi étroite (31) présentant une fente d'entrée de lumière (30) qui s'étend parallèlement au ruban de lumière (12) et a sensiblement la même longueur que la ligne d'inspection (17), et comportant, dans une région éloignée de la fente d'entrée de lumière (30) un premier miroir de renvoi en forme de bande (26) qui s'étend parallèlement à la fente d'entrée de lumière, le premier miroir de renvoi en forme de bande (26) renvoyant la lumière reçue vers un second miroir de renvoi en forme de bande (27) agencé parallèlement au premier miroir de renvoi en forme de bande, et ce second miroir de renvoi en forme de bande étant disposé plus rapproché de la fente d'entrée de lumière (30) mais déplacé latéralement de cette dernière et dirigeant la lumière reçue vers la caméra en ligne (14, 14'), laquelle est montée à l'autre extrémité proche du premier miroir de renvoi en forme de bande (26) mais décalée latéralement par rapport à celui-ci, le premier et le second miroirs de renvoi en forme de bande (26, 27) étant de préférence réalisés progressivement plus courts en fonction du faisceau reçu (33) qui converge vers l'objectif (32) de la caméra en ligne (14, 14')

6. Appareil selon l'une quelconque des revendications précédentes, caractérisé en ce que l'angle d'observation (α, β) des caméras en ligne (14, 14') par rapport au plan tangent à la surface (19) à l'emplacement du ruban de lumière (12) est réglable en agençant la caméra en ligne (14, 14') sur un dispositif de réglage angulaire (23); et/ou en ce que les moyens d'illumination (11) comportent une ou plusieurs sources lumineuses (34) analogues à des lignes, agencées sur une ligne droite commune, l'image des sources lumineuses étant formée sur la bande (18) au moyen d'un miroir concave en forme de bande (35) agencé parallèlement à la ligne droite, de préférence dans une échelle d'image de 1:1 et formant à cet endroit le ruban de lumière (12), la largeur et en option également la longueur de la, ou des sources lumineuses étant de préférence définies par un diaphragme à fente (36) agencé directement en face de la, ou des sources lumineuses, les bords du diaphragme à fente délimitant nettement le ruban de lumière (12) produit sur la bande (18) et formant ainsi deux bords d'ombre (24, 25), et/ou en ce que plusieurs miroirs concaves (35) et plusieurs sources lumineuses (34) avec des diaphragmes à fente (36) sont agencés en rangée l'un derrière l'autre afin de former un ruban continu de lumière composé de plusieurs rubans individuels de lumière.

7. Appareil selon la revendication 6, caractérisé en ce que la source lumineuse et le diaphragme à fente (36) sont réalisés sensiblement plus courts que le miroir concave (35), et en ce que le miroir concave (35) est réalisé sensiblement plus court que le ruban de lumière (12).

8. Appareil selon l'une quelconque des revendications précédentes, caractérisé en ce que la bande (18) peut être déplacée dans une direction parallèle à son plan; et en ce que le ruban de lumière (12) est agencé transversalement à la direction de déplacement, et/ou en ce que la bande (18) est guidée au niveau de la ligne d'inspection (17) sur une partie cylindrique aplatie (37) de verre durci, dont l'axe s'étend parallèlement à la ligne d'inspection (17).

9. Appareil selon l'une quelconque des revendications précédentes, caractérisé en ce que le miroir concave est un miroir cylindrique (35) dont la section transversale est de préférence partiellement cylindrique ou partiellement elliptique, et/ou en ce que l'angle d'observation de faible valeur (α) de la caméra en ligne (14) qui fonctionne en réémission s'élève à 10 à 30°, en particulier 15 à 25° et de préférence à environ 20°.

10. Appareil selon l'une quelconque des revendications précédentes, caractérisé en ce qu'un moniteur de télévision (38) est raccordé au circuit de traitement électronique (16), le signal de sortie de la ligne de diodes étant fourni au moniteur de télévision en tant que signal de modulation de ligne, et la fréquence des lignes du moniteur de télévision étant synchronisée avec la fréquence de balayage de la ligne de diodes (15) et son saut de ligne étant synchronisé avec la vitesse de la bande, de telle manière qu'une image de télévision est produite de la surface (19) de la bande en déplacement sous le ruban de lumière (12) en fonction du nombre de lignes présentes sur le moniteur de télévision (38), l'image de télévision reproduisant les défauts sous la forme de taches sombres.
